# EUROPEAN PATENT APPLICATION

(11) **EP 4 604 360 A1**
(43) Date of publication of application: **20.08.2025**
(21) Application number: 23877081.2
(22) Date of filing: 14.09.2023
(51) Int. Cl.: H02K 1/18, H02K 7/116

(54) **UNIT**

(30) Priority: 12.10.2022 JP 2022164150
(71) Applicant: Jatco Ltd., Shizuoka 417-8585 (JP)
(72) Inventor: TANAKA, Daiki, Fuji-shi, Shizuoka 417-8585 (JP); MAEDA, Atsushi, Fuji-shi, Shizuoka 417-8585 (JP)
(74) Representative: Hoefer & Partner Patentanwälte mbB
(86) International application number: PCT/JP2023/033561
(87) International publication number: WO 2024/080075

(57) **Abstract**

[PROBLEMS] To improve a layout property of a unit.

[SOLUTIONS] A unit includes: a bolt; and a rotary electrical machine. The rotary electrical machine includes a rotor and a stator surrounding an outer periphery of the rotor. The stator includes a stator protrusion portion protruding radially outward from an outer periphery of the stator. The bolt is inserted into the stator protrusion portion in a direction from one axial end side of the stator toward the other axial end side of the stator. A neutral point of the stator and a head portion of the bolt are disposed on the one axial end side of the stator. The neutral point of the stator is offset from the head portion of the bolt when viewed in an axial direction.

## Description

### TECHNICAL FIELD

The present invention relates to a unit.

### BACKGROUND ART

Patent Documents 1 and 2 disclose a technique of disposing a neutral point of a coil of a stator with a focus on cooling performance.

### PRIOR ART DOCUMENT

### PATENT DOCUMENT

Patent Document 1: JP200614438A
Patent Document 2: JP2010252521A

### SUMMARY OF INVENTION

### PROBLEMS TO BE SOLVED BY THE INVENTION

Since the coil is bundled at the neutral point, a size of the stator is increased at the neutral point by an amount corresponding to protrusion of the coil. Therefore, a size of a unit provided with the stator is also increased if the disposition of the neutral point is not taken into consideration, and as a result, a layout property of the unit may be reduced.

The present invention has been made in view of such a problem, and an object thereof is to improve the layout property of the unit.

### SOLUTIONS TO THE PROBLEMS

A unit according to an embodiment of the present invention includes a bolt and a rotary electrical machine, and the rotary electrical machine includes a rotor and a stator surrounding an outer periphery of the rotor. The stator includes a stator protrusion portion protruding radially outward from an outer periphery of the stator, and the bolt is inserted into the stator protrusion portion in a direction from one axial end side of the stator toward the other axial end side of the stator. A neutral point of the stator and a head portion of the bolt are disposed on the one axial end side of the stator, and the neutral point of the stator is offset from the head portion of the bolt when viewed in an axial direction.

### ADVANTAGEOUS EFFECTS OF INVENTION

Here, a wall for fixing a bolt that fastens a stator to a housing is required on the other axial end side of the stator. As a result, an axial space of the unit is reduced on the other axial end side. On the other hand, there is no such restriction on the one axial end side of the stator because it is a side into which the bolt is inserted, and there is a margin in the axial space of the unit as compared to that on the other axial end side.

Therefore, in the above embodiment, the neutral point is disposed on the one axial end side of the stator. Accordingly, the axial space of the unit on the one axial end side of the stator can be effectively utilized, and thus an increase in the size of the unit due to the protrusion of the coil at the neutral point can be suppressed. As a result, as compared to a case where the neutral point is disposed on the other axial end side of the stator, at least the layout property of the unit in the axial direction can be improved.

In addition, in a case where when the neutral point is disposed on the one axial end side of the stator, but at a position overlapping the head portion of the bolt when viewed in the axial direction, a space corresponding to a thickness of the head portion of the bolt and an insulation distance from the head portion of the bolt are required in the axial direction, and thus the coil protrudes excessively at the neutral point in the axial direction. As a result, the size of the unit is increased, and thus the layout property of the unit may be reduced.

According to the above embodiment, since the neutral point is disposed at a position where the neutral point is offset from the head portion of the bolt when viewed in the axial direction, excessive protrusion of the coil in the axial direction due to the head portion of the bolt does not occur. Accordingly, at least the layout property of the unit in the axial direction can be improved based also on such a point of view.

### BRIEF DESCRIPTION OF DRAWINGS

[FIG. 1] FIG. 1 is a schematic configuration diagram of a unit according to the present embodiment.
[FIG. 2] FIG. 2 is a diagram of the unit as viewed from one axial side with a cover removed.
[FIG. 3] FIG. 3 is a diagram of the unit as viewed from the other axial side with a cover removed.

### DESCRIPTION OF EMBODIMENTS

Hereinafter, embodiments of the present invention will be described with reference to the accompanying drawings.

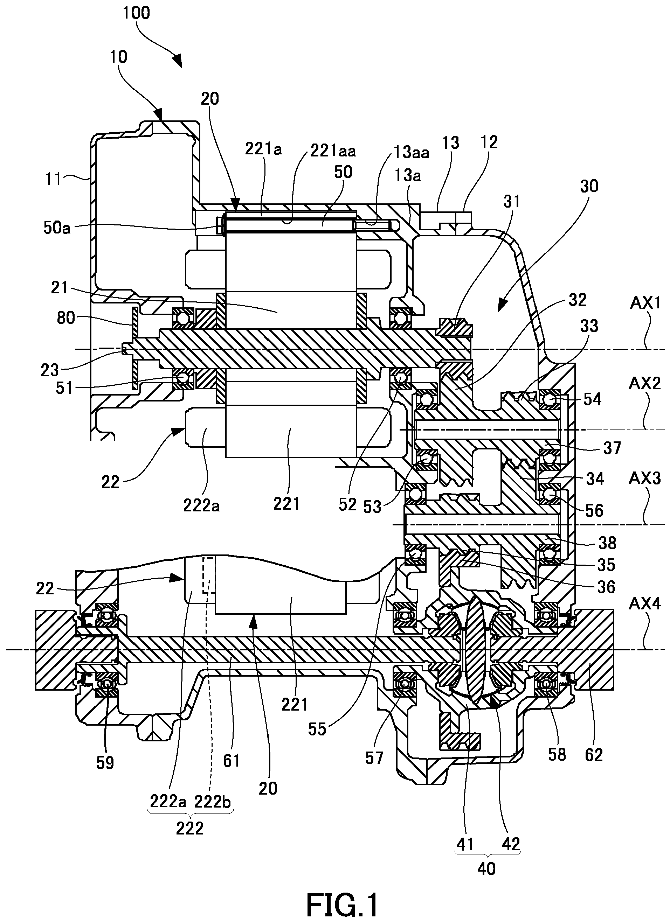

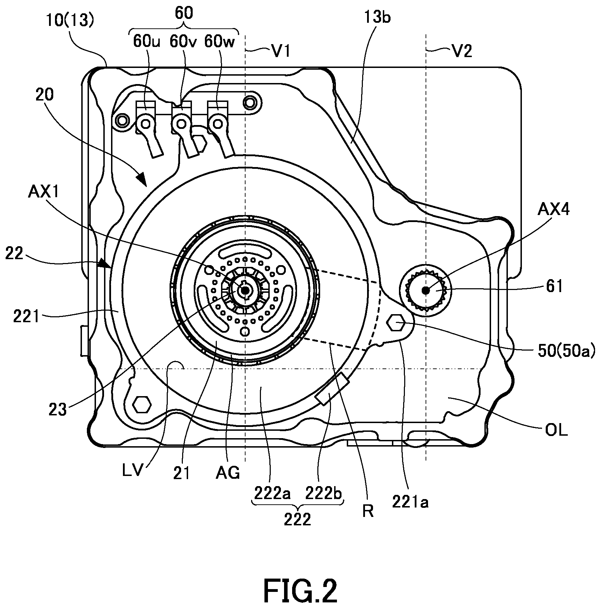

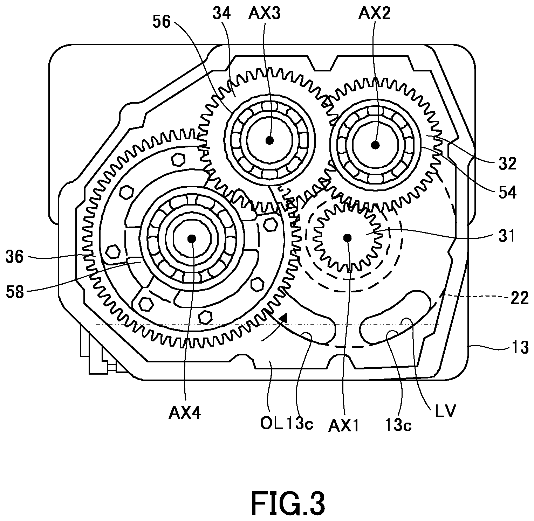

FIG. 1 is a schematic configuration diagram of a unit 100 according to the present embodiment. FIG. 2 is a diagram of the unit 100 as viewed from one axial side with a first cover 11 removed. FIG. 3 is a diagram of the unit 100 as viewed from the other axial side with a second cover 12 removed. In FIG. 1, a power transmission structure of the unit 100 is illustrated in a developed plan view. In FIG. 1, a direction orthogonal to the paper surface corresponds to a gravity direction, and in FIGS. 2 and 3, an up-down direction corresponds to the gravity direction.

Regarding the term of "unit", the unit can also be referred to as, for example, a motor unit (a unit including at least a motor) or a power transmission device (a device including at least a power transmission mechanism). The motor is a rotary electrical machine having an electric motor function and/or a generator function (at least one of the electric motor function and the generator function). The power transmission mechanism is, for example, a gear mechanism and/or a differential gear mechanism. A device (unit) including a motor and a power transmission mechanism is included in concepts of both the motor unit and the power transmission device.

The unit 100 includes a housing 10, a rotary electrical machine 20, a reduction mechanism 30, a differential gear 40, and a bolt 50 as illustrated in FIG. 1, and also includes a connector terminal 60 as illustrated in FIG. 2.

The unit 100 is mounted on a vehicle. The vehicle is an electric vehicle. The housing 10 includes the first cover 11, the second cover 12, and a case 13. The rotary electrical machine 20, the reduction mechanism 30, and the differential gear 40 are accommodated in the housing 10. The first cover 11 closes an opening of the case 13 having a cylindrical shape from the one axial side (left side in FIG. 1), and the second cover 12 closes an opening of the case 13 from the other axial side (right side in FIG. 2). The rotary electrical machine 20 is accommodated in the case 13, and the differential gear 40 is accommodated in the second cover 12.

The rotary electrical machine 20 includes a rotor 21, a stator 22, and a rotating shaft 23, and constitutes a drive source of the vehicle. The rotor 21 is provided on an outer periphery of the rotating shaft 23. The stator 22 is provided in the case 13. The stator 22 accommodates the rotor 21 and surrounds an outer periphery of the rotor 21. As illustrated in FIG. 1, the rotating shaft 23 protrudes from the rotor 21 toward both axial sides. The rotating shaft 23 penetrates through the first cover 11 on the one axial side and penetrates through the case 13 on the other axial side. A bearing 51 is provided on the first cover 11 at a portion through which the rotating shaft 23 penetrates, and a bearing 52 is provided on the case 13 at a portion through which the rotating shaft 23 penetrates, and the rotating shaft 23 is supported by the bearing 51 and the bearing 52. A resolver 80 is provided on the rotating shaft 23 at a portion protruding from the first cover 11. The resolver 80 detects rotation of the rotary electrical machine 20. The stator 22 will be further described later.

The reduction mechanism 30 is a gear mechanism, and includes a first gear 31, a second gear 32, a third gear 33, a fourth gear 34, a fifth gear 35, a sixth gear 36, a shaft 37, and a shaft 38. The reduction mechanism 30 is a four-axis reduction mechanism, and includes a first axis AX1, a second axis AX2, a third axis AX3, and a fourth axis AX4. The first axis AX1, the second axis AX2, the third axis AX3, and the fourth axis AX4 all constitute an axis of the unit 100 and extend along the same direction.

Accordingly, extending directions of the first axis AX1, the second axis AX2, the third axis AX3, and the fourth axis AX4 all correspond to the axial direction of the unit 100. That is, the axial direction means an axial direction of a rotating shaft of a component (for example, motor, gear mechanism, and differential gear mechanism) that constitutes a unit. A radial direction of the unit 100 is a direction perpendicular to any of the first axis AX1, the second axis AX2, the third axis AX3, and the fourth axis AX4. The first axis AX1 constitutes an axis of the rotating shaft 23, the second axis AX2 constitutes an axis of the shaft 37, the third axis AX3 constitutes an axis of the shaft 38, and the fourth axis AX4 constitutes an axis of the differential gear 40.

The first gear 31 is disposed on the first axis AX1 together with the rotary electrical machine 20. In other words, the rotary electrical machine 20 and the first gear 31 are disposed coaxially with respect to the first axis AX1. Similarly, the second gear 32 and the third gear 33 are disposed on the second axis AX2, and the fourth gear 34 and the fifth gear 35 are disposed on the third axis AX3. The sixth gear 36 and the differential gear 40 are disposed on the fourth axis AX4.

As illustrated in FIG. 3, the first axis AX1 and the fourth axis AX4 are disposed at a lower side with respect to the second axis AX2 and the third axis AX3 when viewed in the axial direction.

An upper side and the lower side refer to up-down relations in the gravity direction when viewed in a predetermined direction including the axial direction and the radial direction. For example, in a case where a first element is located obliquely above a second element without overlapping the second element in the gravity direction when viewed in the axial direction, and the first element and the second element do not overlap each other when viewed in the radial direction, the first element is located on the upper side of the second element.

The expression of "overlap each other when viewed in a predetermined direction including a radial direction and an axial direction" means overlapping each other in the predetermined direction, and means that a plurality of elements are aligned in the predetermined direction. Therefore, when a drawing illustrates that a plurality of elements are aligned in a predetermined direction, it may be assumed that the description contains a sentence explaining that the plurality of elements overlap when viewed in the predetermined direction.

As a result of the disposition as described above, a layout in which the first axis AX1 and the fourth axis AX4 are disposed in a manner of being concentrated on a lower side of the unit 100 in the gravity direction is achieved.

As illustrated in FIG. 1, the first gear 31 is provided on the rotating shaft 23 at a portion protruding from the case 13 on the other axial side with respect to the rotor 21. The second gear 32 is provided on the shaft 37 and meshes with the first gear 31. The second gear 32 has a larger number of teeth than that of the first gear 31, and constitutes a first reduction gear stage together with the first gear 31. The third gear 33 is provided on the shaft 37 on a side farther away from the rotary electrical machine 20 with respect to the second gear 32, that is, on the other axial side. The shaft 37 is supported at both ends by a bearing 53 provided in the case 13 and a bearing 54 provided in the second cover 12.

The fourth gear 34 is provided on the shaft 38 and meshes with the third gear 33. The fourth gear 34 has a larger number of teeth than that of the third gear 33, and constitutes a second reduction gear stage together with the third gear 33. The fifth gear 35 is provided on the shaft 38. The fifth gear 35 is provided on the shaft 38 on a side closer to the rotary electrical machine 20 with respect to the fourth gear 34, that is, on the one axial side. The shaft 38 is supported at both ends by a bearing 55 provided in the case 13 and a bearing 56 provided in the second cover 12.

The sixth gear 36 meshes with the fifth gear 35. The sixth gear 36 is a final gear and is provided on the differential gear 40. Power from the rotary electrical machine 20 is transmitted from the sixth gear 36 to the differential gear 40. The sixth gear 36 overlaps the first gear 31 when viewed in the radial direction. For example, the sixth gear 36 overlaps the first gear 31 when viewed in the radial direction along a plane including the first axis AX1 and the fourth axis AX4.

The sixth gear 36 has a larger number of teeth than that of the fifth gear 35, and constitutes a third reduction gear stage together with the fifth gear 35. Accordingly, in the reduction mechanism 30, a three-stage reduction is performed by the first gear 31 and the second gear 32, the third gear 33 and the fourth gear 34, and the fifth gear 35 and the sixth gear 36.

The differential gear 40 is a differential gear mechanism and includes a differential case 41 and a differential unit 42. The sixth gear 36 can also be understood as a part of the differential gear 40. The differential case 41 is supported by a bearing 57 provided in the case 13 and a bearing 58 provided in the second cover 12, and rotates together with the sixth gear 36. The sixth gear 36 is coaxially fixed to an outer wall portion of the differential case 41, and the differential case 41 accommodates the differential unit 42. The differential unit 42 distributes and outputs power that is input to the differential case 41 via the sixth gear 36 to drive wheels in a left-right direction of the vehicle.

The differential gear 40 is disposed in a direction away from the stator 22 with respect to the sixth gear 36. Accordingly, the differential gear 40 is disposed in a space on an end portion side of the unit 100 formed according to a gear disposition of the reduction mechanism 30.

On the differential unit 42, a first drive shaft 61 is attached from the one axial side, and a second drive shaft 62 is attached from the other axial side. The power from the rotary electrical machine 20 is transmitted from the differential unit 42 to one drive wheel via the first drive shaft 61 and to the other drive wheel via the second drive shaft 62. The first drive shaft 61 is longer than the second drive shaft 62 and is supported by a bearing 59 provided on the first cover 11.

Next, the stator 22 will be further described.

As illustrated in FIG. 1, the stator 22 includes a stator core 221 and a coil 222. The stator core 221 is formed by laminating a plurality of electromagnetic steel sheets. The stator core 221 is provided with a protrusion portion 221a, and the protrusion portion 221a is provided with a through hole 221aa penetrating through the stator core 221 in the axial direction.

As illustrated in FIG. 2, the protrusion portion 221a protrudes radially outward from an outer periphery of the stator 22. The protrusion portion 221a is provided to protrude radially outward with respect to an outer periphery of a circular portion of the stator core 221, and thus protrudes radially outward with respect to each of outer peripheries of circular portions adjacent to each other on both circumferential sides. A plurality of (three in this case) protrusion portions 221a are provided in a circumferential direction. The plurality of protrusion portions 221a can be provided uniformly in the circumferential direction.

The bolt 50 is inserted into the protrusion portion 221a. The bolt 50 is a through bolt and is a conductive material. The bolt 50 is provided on each of the plurality of protrusion portions 221a, and thus is provided in plural. As illustrated in FIG. 1, the protrusion portion 221a is provided with the through hole 221aa. The bolt 50 is inserted into the through hole 221aa in a direction from one axial end side of the stator 22 toward the other axial end side, and thus is inserted into the protrusion portion 221a in the same direction. The one axial end side of the stator 22 corresponds to the one axial side of the unit 100, and the other axial end side of the stator 22 corresponds to the other axial side of the unit 100.

A wall portion 13a of the case 13 exists on the other axial end side of the stator 22. A portion of the wall portion 13a facing the protrusion portion 221a is formed in a boss shape, and a bolt hole 13aa is provided in this portion. The bolt 50 is fixed to the wall portion 13a by being fastened to the bolt hole 13aa in a state of being inserted into the protrusion portion 221a. As a result, the stator 22 is bolted to the case 13 by the wall portion 13a. A plurality of bolt holes 13aa are provided corresponding to the protrusion portions 221a or the through holes 221aa. The protrusion portion 221a corresponds to a stator protrusion portion.

As illustrated in FIGS. 1 and 2, the coil 222 has coil ends 222a and a neutral point 222b. The coil ends 222a are formed on both axial sides of the stator 22. The neutral point 222b is a portion where coils of respective phases of a U-phase, a V-phase, and a W-phase constituting the coil 222 are bundled together, and the coil 222 forms the neutral point 222b at one end portion and is connected to the connector terminal 60 at the other end portion.

The connector terminal 60 includes a terminal 60u, a terminal 60v, and a terminal 60w, and is electrically connected to the stator 22. The coil of the U-phase is connected to the terminal 60u, the coil of the V-phase is connected to the terminal 60v, and the coil of the W-phase is connected to the terminal 60w, respectively.

As can be seen from FIGS. 1 and 2, the neutral point 222b and the head portion 50a of the bolt 50 are disposed on the one axial end side of the stator 22. Since the one axial end side of the stator 22 is a side into which the bolt 50 is inserted, a wall portion such as the wall portion 13a for fixing the bolt 50 is not necessary. Accordingly, restriction of the axial space of the unit 100 such as those caused by the wall portion 13a on the other axial end side does not exist on the one axial end side.

Therefore, in the unit 100, the neutral point 222b is disposed on the one axial end side of the stator 22. As a result, the axial space of the unit 100 is effectively utilized on the one axial end side of the stator 22. Accordingly, as compared to a case where the neutral point 222b is disposed on the other axial end side of the stator 22, an increase in the size of the unit 100 due to the protrusion of the coil 222 at the neutral point 222b is suppressed. As a result, the layout property of the unit 100 is improved at least in the axial direction.

As illustrated in FIG. 2, the neutral point 222b is offset from the head portion 50a when viewed in the axial direction. In other words, the neutral point 222b does not overlap the head portion 50a when viewed in the axial direction, and has no overlap with the head portion 50a. Accordingly, since a space corresponding to a thickness of the head portion 50a and an insulation distance from the head portion 50a are required in the axial direction, excessive protrusion of the coil 222 in the axial direction does not occur. As a result, the layout property of the unit 100 is improved at least in the axial direction based also on such a point of view. The neutral point 222b can be disposed to protrude radially outward from the rotary electrical machine 20 when viewed in the axial direction, and is disposed to slightly protrude in the present embodiment.

The neutral point 222b is disposed so as to avoid a region R between the protrusion portion 221a and the rotor 21 when viewed in the axial direction. Although one region R is illustrated in FIG. 2, the region R exists for each of the plurality of protrusion portions 221a. The region R is a region divided between a root of the protrusion portion 221a of the stator core 221 (boundary portion radially inward of protrusion portion 221a defined by outer diameter of circular portion of stator 22) and the outer periphery of the rotor 21 when viewed in the axial direction.

The region R is a region between the root of the protrusion portion 221a and a central portion of the rotor 21 when viewed in the axial direction, and is illustrated as a surface surrounded by a broken line as illustrated in FIG. 2 when viewed in the axial direction. Such a region R can be, for example, a region divided between two lines that are parallel to a line including respective centers of the rotor 21 and the through hole 221aa when viewed in the axial direction and include both circumferential end positions of the protrusion portion 221a.

The reason why the neutral point 222b is disposed so as to avoid the region R when viewed in the axial direction is as follows.

Here, in order to cause the neutral point 222b to offset from the head portion 50a when viewed in the axial direction, the neutral point 222b may also be disposed in the vicinity of the root of the protrusion portion 221a while avoiding the head portion 50a. However, in this case, in order to ensure an insulation distance between the bolt 50 and the neutral point 222b, the bolt 50 is disposed to be separated radially outward from the neutral point 222b. As a result, the stator 22 inevitably expands in the radial direction.

Therefore, in the unit 100, such a situation is avoided by disposing the neutral point 222b so as to avoid the region R when viewed in the axial direction. Accordingly, at least the layout property of the unit 100 in the radial direction is improved.

The housing 10 includes a peripheral wall portion 13b surrounding the rotary electrical machine 20 and the first drive shaft 61 when viewed in the axial direction. The peripheral wall portion 13b is a peripheral wall portion of the case 13 of the housing 10, and the first drive shaft 61 constitutes a shaft connected to a downstream side of the rotary electrical machine 20 in a dynamical manner.

Here, in a configuration in which the rotary electrical machine 20 and the first drive shaft 61 are disposed in a same room surrounded by one peripheral wall portion 13b when viewed in the axial direction, there is the following spatial margin in terms of structure. That is, in such a configuration, as illustrated in FIGS. 1 and 2, there is a spatial margin on a side on which the first drive shaft 61 is disposed when viewed from a rotation center of the rotary electrical machine 20, that is, from the first axis AX1, on the one axial end side of the stator 22.

Therefore, the neutral point 222b is located between a first vertical line V1 passing through a rotation center of the rotor 21 and a second vertical line V2 passing through a rotation center of the first drive shaft 61, that is, the fourth axis AX4, when viewed in the axial direction. Accordingly, since the neutral point 222b is disposed in such a manner as to effectively utilize a space having a spatial margin as described above, an increase in the size of the unit 100 due to the neutral point 222b is suppressed, and the layout property of the unit 100 is improved.

As illustrated in FIG. 2, the connector terminal 60 is disposed on the one axial end side of the stator 22. Accordingly, all of the neutral point 222b, the head portion 50a, and the connector terminal 60, which may affect the size of the unit 100 at least in the axial direction, are concentrated on the one axial end side of the stator 22. As a result, as compared to a case where the connector terminal 60 is disposed on the other axial end side of the stator 22, at least the layout property of the unit 100 in the axial direction is improved.

As illustrated in FIGS. 2 and 3, the unit 100 includes oil OL. The oil OL is supplied to the rotary electrical machine 20 in the case 13 from the outside of the housing 10, for example, and lubricates the rotary electrical machine 20. A part of the oil OL supplied to the rotary electrical machine 20 is stored in the housing 10 and is accommodated in the housing 10. The remaining oil OL is discharged to the outside of the housing 10. The oil OL can be used by being circulated inside and outside the housing 10.

The case 13 has through holes 13c. The through holes 13c are formed in the case 13 at a portion on a lower side in the gravity direction with respect to the first axis AX1 and the fourth axis AX4, and communicate the inside of the second cover 12 with the inside of the case 13. Therefore, the oil OL in the case 13 can flow into the second cover 12 through the through holes 13c as indicated by an arrow, and is also used to lubricate the differential gear 40. An oil reservoir is formed inside each of the second cover 12 and the case 13 at the portion on the lower side in the gravity direction. The oil reservoir of the unit 100 is also formed in the first cover 11.

As illustrated in FIG. 2, the neutral point 222b is disposed at a position that is submerged in oil at least while the vehicle is traveling. The neutral point 222b is disposed in such a manner of being submerged in oil (buried in oil OL) in the oil reservoir and being disposed on the lower side in the gravity direction with respect to an oil level LV of the oil reservoir. The oil level LV is an oil level of the oil reservoir of the housing 10 in a steady circulation state, and has a common oil level height in the oil reservoirs in the first cover 11, the second cover 12, and the case 13.

The steady circulation state is a state in which circulation of the oil OL is steady, and is considered as a state in which, for example, in a case where circulation of oil is performed using a pump, the oil level LV is stabilized during a pump operation. The circulation of oil may be performed by scraping up the oil OL by a rotating member such as a gear in the housing 10. In this case, the steady circulation state is considered as a state in which the oil level LV is stabilized during rotation of the rotating member.

The oil level LV is set to a height at which the stator 22 is immersed in the oil OL in the steady circulation state and the oil OL does not enter an air gap AG which is a gap between the rotor 21 and the stator 22 of the rotary electrical machine 20. This is because, when the oil OL enters the air gap AG, a rotation resistance of the rotary electrical machine 20 rapidly increases, while the stator 22 is desired to be cooled.

Therefore, by setting the oil level LV as described above, the oil OL is set so as to contact the coil end 222a of the stator 22. The oil level LV is set at a position overlapping the through holes 13c when viewed in the axial direction in the steady circulation state.

The steady circulation state is established at least while the vehicle is traveling, and the neutral point 222b is submerged in oil in the steady circulation state while the vehicle is traveling, for example. The expression of "while the vehicle is traveling" means, in other words, "during driving of the rotary electrical machine 20", and at the neutral point 222b where the coils of the respective phases are bundled, the coil 222 is particularly easily heated during driving of the rotary electrical machine 20. Therefore, by disposing the neutral point 222b to be submerged in oil while the vehicle is traveling, a temperature rise at the neutral point 222b can be suitably suppressed, which is preferable.

Regardless of whether the housing 10 is in the steady circulation state, the neutral point 222b can be disposed, for example, at a position lower than a dropped oil level of the oil reservoir in a case where the oil level drops while the vehicle is traveling, and at a position lower than an inclined oil level in a case where the oil level is inclined while the vehicle is traveling.

That is, the neutral point 222b can be disposed at a position that is submerged in oil while the vehicle is traveling regardless of a vertical position of the oil level and an inclination of the oil level that change while the vehicle is traveling. Alternatively, the neutral point 222b is preferably disposed at the position that is submerged in oil while the vehicle is traveling regardless of the change in oil level while the vehicle is traveling including the vertical position of the oil level and the inclination of the oil level. The change in oil level while the vehicle is traveling may be a change within an assumed range in design.

Next, main functions and effects of the present embodiment will be described.
(1) The unit 100 includes the bolt 50 and the rotary electrical machine 20. The rotary electrical machine 20 includes the rotor 21 and the stator 22 surrounding the outer periphery of the rotor 21. The stator 22 includes the protrusion portion 221a protruding radially outward from the outer periphery of the stator 22. The bolt 50 is inserted into the protrusion portion 221a in a direction from the one axial end side to the other axial end side of the stator 22. The neutral point 222b of the stator 22 and the head portion 50a of the bolt 50 are disposed on the one axial end side of the stator 22. When viewed in the axial direction, the neutral point 222b of the stator 22 is offset from the head portion 50a of the bolt 50.

According to such a configuration, the axial space of the unit 100 on the one axial end side of the stator 22 can be effectively utilized. Therefore, an increase in the size of the unit 100 due to the protrusion of the coil 222 at the neutral point 222b can be suppressed. As a result, as compared to a case where the neutral point 222b is disposed on the other axial end side of the stator 22, at least the layout property of the unit 100 in the axial direction can be improved. In addition, since the neutral point 222b is disposed at a position offset from the head portion 50a when viewed in the axial direction, excessive protrusion of the coil 222 in the axial direction due to the head portion 50a does not occur. Accordingly, at least the layout property of the unit 100 in the axial direction can be improved based also on such a point of view.

(2) In the unit 100, when viewed in the axial direction, the neutral point 222b of the stator 22 is disposed so as to avoid the region R between the protrusion portion 221a and the rotor 21. According to such a configuration, it is possible to avoid a situation in which a disposition is achieved in which a position of the bolt 50 is separated radially outward from the neutral point 222b in order to ensure the insulation distance between the bolt 50 and the neutral point 222b. Therefore, at least the layout property of the unit 100 in the radial direction can be improved.

(3) The unit 100 includes the housing 10 that accommodates the rotary electrical machine 20, and the first drive shaft 61 that is connected to the downstream side of the rotary electrical machine 20 in a dynamical manner. The housing 10 includes the peripheral wall portion 13b surrounding the rotary electrical machine 20 and the first drive shaft 61 when viewed in the axial direction. When viewed in the axial direction, the neutral point 222b is located between the first vertical line V1 passing through the rotation center of the rotor 21 and the second vertical line V2 passing through the rotation center of the first drive shaft 61.

According to such a configuration, since the rotary electrical machine 20 and the first drive shaft 61 are disposed in the same room surrounded by one peripheral wall portion 13b when viewed in the axial direction, the neutral point 222b can be disposed in a manner of effectively utilizing a space having a spatial margin on the one axial end side of the stator 22. Accordingly, the layout property of the unit 100 can be improved.

(4) The unit 100 is used in the vehicle and has the oil OL. The neutral point 222b is disposed at least at a position that is submerged in oil while the vehicle is traveling. According to such a configuration, a temperature rise at the neutral point 222b, which is particularly easily heated during driving of the rotary electrical machine 20, can be appropriately suppressed by cooling with the oil OL.

Although the embodiment of the present invention has been described above, the above embodiment is merely a part of application examples of the present invention, and is not intended to limit the technical scope of the present invention to the specific configurations of the above embodiment.

### DESCRIPTION OF REFERENCE SIGNS

- 10: housing
- 13: case
- 13b: peripheral wall portion
- 20: rotary electrical machine
- 21: rotor
- 22: stator
- 221: stator core
- 221a: protrusion portion (stator protrusion portion)
- 222: coil
- 222a: coil end
- 222b: neutral point
- 30: reduction mechanism
- 40: differential gear
- 50: bolt
- 50a: head portion
- 60: connector terminal
- 61: first drive shaft (shaft)
- 100: unit
- LV: oil level
- OL: oil
- R: region
- V1: first vertical line
- V2: second vertical line

## Claims

1. A unit comprising: a bolt; and a rotary electrical machine, wherein
the rotary electrical machine includes a rotor and a stator surrounding an outer periphery of the rotor,
the stator includes a stator protrusion portion protruding radially outward from an outer periphery of the stator,
the bolt is inserted into the stator protrusion portion in a direction from one axial end side of the stator toward the other axial end side of the stator,
a neutral point of the stator and a head portion of the bolt are disposed on the one axial end side of the stator, and
the neutral point of the stator is offset from the head portion of the bolt when viewed in an axial direction.

2. The unit according to claim 1, wherein
the neutral point of the stator is disposed so as to avoid a region between the stator protrusion portion and the rotor when viewed in the axial direction.

3. The unit according to claim 1, further comprising:
a housing that accommodates the rotary electrical machine; and
a shaft that is connected to a downstream side of the rotary electrical machine in a dynamical manner, wherein
the housing includes a peripheral wall portion that surrounds the rotary electrical machine and the shaft when viewed in the axial direction, and
the neutral point is located between a first vertical line passing through a rotation center of the rotor and a second vertical line passing through a rotation center of the shaft when viewed in the axial direction.

4. The unit according to any of claims 1 to 3, wherein
the unit is used in a vehicle, and
the neutral point is disposed at a position that is submerged in oil at least while the vehicle is traveling.
